# EUROPÄISCHE PATENTSCHRIFT

(11) **EP 2 607 011 B1**
(45) Veröffentlichungstag und Bekanntmachung des Hinweises auf die Patenterteilung: **08.04.2015**
(21) Anmeldenummer: 12157507.0
(22) Anmeldetag: 29.02.2012
(51) Int. Cl.: B23K 11/11, B23K 11/24, B23K 11/26, B23K 11/31

(54) **Verfahren und Schweißvorrichtung zum elektrischen Widerstandsschweißen mittels Kondensatorentladung**
Method of and device for electrical resistance welding by means of capacitor discharge
Procédé et dispositif de soudage électrique par résistance utilisant une décharge de condensateurs

(30) Priorität: 21.12.2011 DE 102011056817
(43) Veröffentlichungstag der Anmeldung: 26.06.2013
(73) Patentinhaber: Nimak GmbH, 57537 Wissen (DE)
(72) Erfinder: Rödder, Bernd, 57587 Honigsessen (DE)
(74) Vertreter: Patentanwälte Dr. Solf & Zapf

(56) Entgegenhaltungen:
- CN-A- 1 799 751
- CN-A- 101 480 754
- GB-A- 2 464 514
- US-B1- 6 825 435

## Beschreibung

Die vorliegende Erfindung betrifft zunächst gemäß dem Oberbegriff des unabhängigen Anspruchs 1 ein Verfahren zum elektrischen Widerstandsschweißen von metallischen Bauteilen, wobei zwei Schweißelektroden unter Zwischenlage der zu verschweißenden Bauteile zusammengeführt werden und ein elektrischer Schweißstrom über die Elektroden und durch die Bauteile geführt wird, wobei der Schweißstrom aus einem Kondensatorspeicher als Stromimpuls durch Kondensatorentladung erzeugt wird.

Ferner betrifft die Erfindung auch gemäß dem Oberbegriff des unabhängigen Anspruchs 7 eine Schweißvorrichtung zum elektrischen Widerstandsschweißen von metallischen Bauteilen, mit zwei unter Zwischenlage der zu verschweißenden Bauteile zusammenführbaren und mit einem Schweißstrom beaufschlagbaren Schweißelektroden und mit einer Stromquelle für den Schweißstrom, wobei die Stromquelle einen Kondensatorspeicher und eine Entladesteuerung derart aufweist, dass der Schweißstrom als Stromimpuls durch eine Kondensatorentladung erzeugt wird.

Zum Verschweißen von metallischen Bauteilen, zumeist Metallblechen, im so genannten Punkt- oder Buckelschweißverfahren ist es bekannt, die zu verbindenden Bauteile unter Verwendung von im Raum beispielsweise über Roboterarme beweglichen Schweißzangen oder stationären Schweißpressen zwischen zwei Schweißelektroden zusammenzupressen und über die Kontaktstellen mit einem hohen Schweißstrom zu beaufschlagen. Der durch die Bauteile fließende Strom verursacht durch Widerstandserwärmung ein lokales Aufschmelzen der Bauteile, die so nach einem anschließenden Abkühlen stoffschlüssig verbunden, d. h. verschweißt werden. Für den Schweißvorgang werden die Elektroden über hydraulische, pneumatische oder servoelektrische Antriebe mit einer bestimmten Kraft auf die Bauteile aufgesetzt. Die Schweißung beginnt mit einer Vorhaltezeit, in der noch ohne Stromeinwirkung mechanische Aufsetzprellungen erfolgen und die Bauteile auf reproduzierbare Kontaktübergänge gepresst werden. In der anschließenden Schweißzeit wird der Schweißstrom über die Elektroden in die zu verbindenden Teile bei anstehender Schweißkraft eingebracht, um diese zu verschmelzen. In einer nachfolgenden Nachhaltezeit wird eine Anpresskraft aufrechterhalten, um das Abkühlen der Schmelze zu kontrollieren.

Für ein solches elektrisches Widerstandsschweißen werden zwei Hauptvarianten bezüglich der Erzeugung des Schweißstromes unterschieden, und zwar einerseits das hier im Zusammenhang mit der vorliegenden Erfindung relevante, gattungsgemäße Kondensator-Entladungs-Schweißen, kurz KES, und andererseits das Mittelfrequenz-Verfahren, kurz MF. Beide Verfahren sind mit Vorteilen, aber auch mit Nachteilen verbunden.

Bei den herkömmlichen Widerstandsschweißverfahren, wie dem MF-Verfahren, wird die erforderliche Schweißenergie unmittelbar während des Schweißprozesses aus dem elektrischen Versorgungsnetz entnommen. Hierzu wird die Netzwechselspannung gleichgerichtet, geglättet und von einem gesteuerten Wechselrichter in eine Wechselspannung mit einer Frequenz von beispielsweise 1 kHz umgesetzt und in unmittelbarer Nähe zur Schweißung über einen Schweißtransformator in den geforderten hohen Strom umgeformt. Von Vorteil ist, dass hierbei der Schweißstrom mit variablen Parametern geregelt werden kann. Allerdings ist von Nachteil, dass der elektrische Anschluss und das speisende Netz sehr stark ausgelegt sein muss, obwohl der eigentliche Schweißprozess maximal nur einige 100 ms andauert. Deshalb können an einem gemeinsamen Netz mehrere Schweißmaschinen nur zeitlich versetzt angesteuert werden. Zudem treten störende Netzrückwirkungen und damit so genannte EMV-Probleme auf, so dass aufwändige EMV-Filter erforderlich sind. Zudem ist auch der erforderliche Schweißtransformator mit Nachteilen, insbesondere einem hohen Aufwand verbunden.

Zu dem Kondensator-Entladungs-Schweißen, kurz KES, wird beispielhaft auf die Veröffentlichung DE 10 2007 022 263 A1 verwiesen. Das KES zeichnet sich durch eine andere Art der Energie-Bereitstellung und besonders kurze Schweißzeiten aus. Beim KES wird die für die Schweißung notwendige Energie kontinuierlich aus dem Versorgungsnetz entnommen und in einem Kondensatorspeicher zwischengespeichert. Der Kondensatorspeicher kann aus mehreren zusammengeschalteten Einzel-Kondensatoren bestehen. Die Kondensatorladung aus dem Netz kann daher auch in Zeiten zwischen den eigentlichen Schweißprozessen, z. B. während der Bauteil-Entnahme und -Bestückung, erfolgen. Dadurch verteilt sich die Energieentnahme aus dem Netz auf eine wesentlich längere Zeit, wodurch der Netzanschluss deutlich weniger belastet wird und daher auch kleiner bzw. schwächer ausgelegt sein kann als bei herkömmlichen, zuvor beschriebenen Widerstandsschweißverfahren. Bei den bekannten KES-Schweißverfahren wird zur Auslösung des Schweißprozesses der Kondensatorspeicher über eine von einem Thyristorschalter gebildete Entladesteuerung auf einen Schweißtransformator geschaltet, der dann die relativ hohe Kondensator-Ladespannung von in aller Regel bis zu 3.200 V auf die jeweilige Schweißspannung, üblicherweise eine Leerlaufspannung von z. B. weniger als 22 V, heruntertransformiert und dabei gleichzeitig einen hohen Schweißstrom-Impuls von z. B. bis zu mehreren 100.000 A erzeugt.

Von Vorteil ist hierbei, dass während des Schweißprozesses das Versorgungsnetz nicht zusätzlich belastet wird, weil ja die Schweißenergie nur aus dem Kondensatorspeicher entnommen wird. Ein weiterer Vorteil ist, dass Kondensatoren als Energiequelle im Schweißmoment einen besonders niedrigen Innenwiderstand haben. Durch diesen niedrigen Innenwiderstand ist der zu entnehmende Schweißstrom zu Beginn der Schweißung, wenn der Kondensator noch vollgeladen ist, besonders schnell verfügbar und besonders hoch. Daraus ergeben sich für die Schweißung besondere Eigenschaften: Durch die kurze Stromflusszeit bleibt die Wärme in der Schweißzone der Bauteile konzentriert, nur wenig Wärme fließt in die Umgebung ab. Dadurch ist weniger Gesamtenergie als bei den "klassischen" Widerstandsschweißverfahren notwendig, und die Schweißenergie ist genauer an die jeweilige Schweißaufgabe anpassbar. Nachteilig ist allerdings, dass die Kondensatorentladung nach dem Zünden des Thyristorschalters ungeregelt und nicht mehr beeinflussbar abläuft; eine Beeinflussung kann nur vorher z. B. über die Höhe der Ladespannung erfolgen. Zudem ist wegen der Höhe der Ladespannung und insbesondere wegen des Impulsbetriebes ein aufwändiger und großer ImpulsTransformator zur Stromerhöhung erforderlich.

Was noch die Ladung des Kondensatorspeichers betrifft, so sind hauptsächlich zwei Möglichkeiten bekannt. In einer weit verbreiteten Variante wird ein Thyristorsteller an das Versorgungsnetz angeschlossen, welcher mit einem Lade-Transformator verbunden ist. Der Lade-Transformator transformiert die Spannung von der jeweiligen Netzspannung auf die hohe Ladespannung des Kondensatorspeichers von bis zu 3.200 V herauf. Durch gezieltes Ansteuern des Thyristorstellers ist ein mehr oder weniger schnelles Aufladen des Kondensatorspeichers möglich. In einer zweiten Variante erfolgt das Aufladen des Kondensatorspeichers über einen Lade-Inverter, der seinerseits ebenfalls an einen Lade-Transformator angeschlossen ist. Der Lade-Inverter besteht aus einer ungesteuerten Gleichrichterschaltung, die eine Zwischenkreis-Gleichspannung erzeugt. Diese Zwischenkreisspannung wird über eine Transistorgruppe in Form einer Brückenschaltung von vier Transistoren in H-Schaltung in eine Wechselspannung mit einer höheren Frequenz als Netzfrequenz umgeformt und auf den Lade-Transformator geschaltet. Durch die höhere Frequenz ist eine genauere Ladesteuerung möglich. In beiden Fällen ist aber auch im Ladekreis ein Transformator angeordnet, was u.a. mit einem zusätzlichen Aufwand verbunden ist.

In der GB 2464514 A, die als nächtstliegenden Stand der Technik angehen wird, wird ein KES-Verfahren beschrieben, bei dem der Schweißstrom aus einem Kondensatorspeicher als Stromimpuls durch Kondensatorentladung erzeugt wird, wobei eine als Abwärtswandler ausgebildete Leistungselektronik zur Steuerung der Kondensatorentladung und des Stromimpulses über eine PWM-Steuerung pulsweitenmoduliert angesteuert wird und der Stromimpuls hinsichtlich seiner Parameter variabel einstellbar ist.

In der US 6,825,435 wird ein KES-Verfahren beschrieben, bei dem eine PWM-Technik verwendet wird, um die Entladung des Kondensatorspeichers zu kontrollieren.

Unter Berücksichtigung des zuvor geschilderten Standes der Technik liegt der vorliegenden Erfindung die Aufgabe zu Grunde, die beschriebenen Nachteile beider Haupt-Schweißverfahren zu vermeiden und dazu ein KES-Verfahren anzugeben und eine entsprechende KES-Schweißvorrichtung zu schaffen, um mit einfachen und wirtschaftlichen Mitteln bessere Variationsmöglichkeiten des Schweißprozesses zur Anpassung an die jeweiligen Einsatzfälle zu erreichen.

Diese Aufgabe wird einerseits durch ein Schweißverfahren gemäß dem unabhängigen Anspruch 1 und andererseits durch eine Schweißvorrichtung gemäß dem unabhängigen Anspruch 7 gelöst. Vorteilhafte Weiterbildungen und Ausgestaltungsmerkmale der Erfindung sind in den jeweils abhängigen Ansprüchen sowie in der anschließenden Beschreibung enthalten.

Demnach zeichnet sich das erfindungsgemäße KES-Schweißverfahren dadurch aus, dass der Stromimpuls hinsichtlich seiner für den Schweißprozess maßgeblichen Parameter über eine Leistungselektronik variabel einstellbar ist, indem Energie aus dem Kondensatorspeicher über die zur Spannungsreduzierung und Stromerhöhung angesteuerte Leistungselektronik, gemäß der Erfindung, direkt ohne einen Schweißtransformator, den Schweißelektroden zugeführt wird. Dazu ist bevorzugt die Leistungselektronik als Abwärtswandler ausgebildet, der zur Steuerung der Kondensatorentladung und des Stromimpulses über eine PWM-Steuerung pulsweitenmoduliert insbesondere mit einer Frequenz im Bereich von 15 kHz bis 250 kHz getaktet mit einem variierbaren Taktverhältnis (Aussteuergrad) angesteuert wird.

Gemäß der Erfindung wird als Kondensatorspeicher eine Speicherkaskade mit mehreren zusammengeschalteten Superkondensatoren verwendet, wobei diese Speicherkaskade eine Gesamt-Kapazität im Bereich von 1 bis 1.000 Farad mit einer Ladespannung von nur maximal 120 V aufweist. Die Anzahl der erforderlichen Superkondensatoren ergibt sich aus deren Einzel-Kapazität und der gewünschten Gesamt-Kapazität der Speicherkaskade bzw. des Kondensatorspeichers.

Der hier im Zusammenhang mit der vorliegenden Erfindung verwendete Begriff "Superkondensator", teilweise auch als "Ultrakondensator" bezeichnet, ist als allgemeiner Oberbegriff zu verstehen für eine neue Gruppe von Kondensatoren, und zwar insbesondere für elektrostatische Doppelschichtkondensatoren, elektrochemische Pseudokondensatoren sowie elektrostatische oder elektrochemische Hybridkondensatoren. Zudem sind auch Doppelschichtkondensatoren mit der englischen Bezeichnung "elektrochemical double layer capacitor", kurz EDLC, umfasst. Solche "Superkondensatoren" zeichnen sich durch eine größte Energiedichte und höchste Kapazitätswerte pro Bauvolumen aller bekannten Kondensatoren aus.

In weiterer bevorzugter Ausgestaltung ist parallel zu der Speicherkaskade ein Zwischenkreis-Kondensator angeordnet, der bevorzugt als einfacher, üblicher Schichtkondensator ausgebildet ist und daher als Impulskondensator fungiert. Die Speicherkaskade wird relativ langsam geladen und entladen, während der Zwischenkreis-Kondensator als Impulskondensator sehr viel schneller entladen werden kann. Dabei wird aus der Speicherkaskade Energie "nachgeschoben". Über die Leistungselektronik ist eine kontrollierte Energieentnahme aus dem Kondensatorspeicher möglich, indem die ohnehin bereits relativ geringe Ladespannung von maximal 120 V in eine noch geringere Spannung von beispielsweise etwa 3 V umgesetzt wird, wobei gleichzeitig ein hoher Stromimpuls zwischen 1 kA und 50 kA erzeugt wird. Dieser Stromimpuls kann vorteilhafterweise über die Leistungselektronik und entsprechende Variation des Aussteuergrades der PWM-Steuerung hinsichtlich seiner für den Schweißprozess relevanten Parameter, unter anderem auch der Impulsdauer, variiert und geregelt werden. So kann die Impulsdauer in einem weiten Bereich von 10 ms bis 1.500 ms eingestellt werden.

In weiterer bevorzugter Ausgestaltung kann die Leistungselektronik als Mehrphasen-Abwärtswandler ausgebildet sein, wobei mehrere parallele Wandlerstufen zeitversetzt synchronisiert angesteuert werden.

Zur Ladung des Kondensatorspeichers ist diesem mit besonderem Vorteil ein regelbares Lade-Netzteil mit Potenzialtrennung vorgeschaltet. Bei dem Netzteil kann es sich um ein Schaltnetzteil handeln, welches von einer Steuereinheit gesteuert wird. Anhand der beigefügten Zeichnungen und darin veranschaulichter, bevorzugter Ausführungsbeispiele soll die Erfindung im Folgenden noch genauer erläutert werden. Es zeigen:
- Fig. 1: ein schematisches Blockschaltbild einer erfindungsgemäßen KES-Schweißvorrichtung in einer ersten Ausführung,
- Fig. 2: ein Schaltbild einer Teilkomponente aus Fig. 1, und zwar die als Abwärtswandler ausgeführte Leistungselektronik der Entladestufe,
- Fig. 3: eine Ausführungsvariante der Leistungselektronik nach Fig. 2,
- Fig. 4: eine Weiterbildung der Leistungselektronik in einer Ausführung als Mehrphasen-Abwärtswandler und
- Fig. 5: ein Blockschaltbild analog zu Fig. 1 in der bevorzugten Ausführung mit der Leistungselektronik nach Fig. 4.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele beschränkt ist.

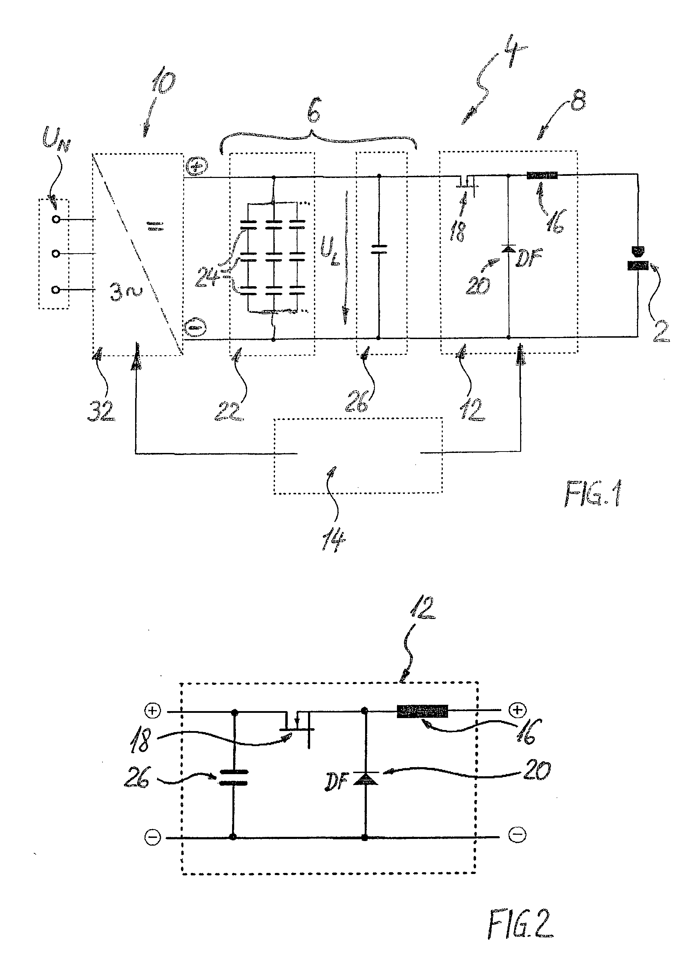

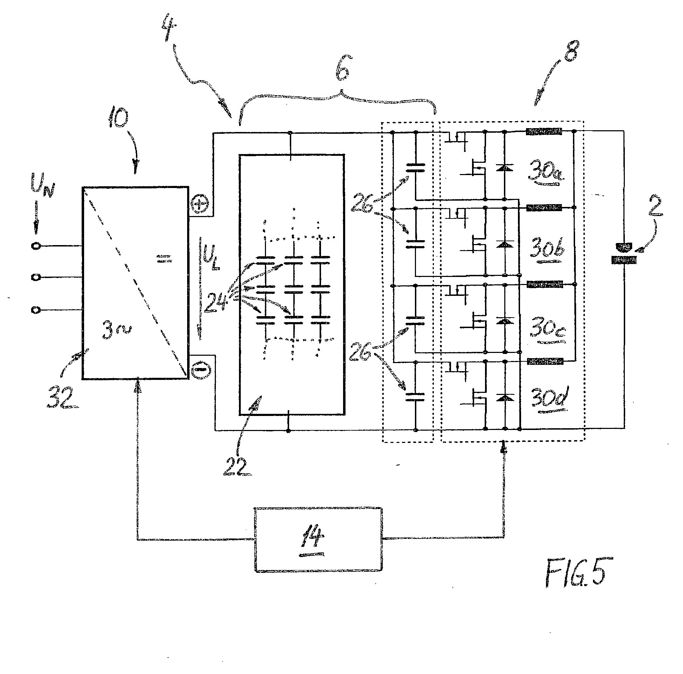

In den Zeichnungen sind von einer erfindungsgemäßen Schweißvorrichtung in erster Linie die elektrischen Komponenten schematisch dargestellt. Gemäß Fig. 1 und 5 sind zwei Schweißelektroden 2 über nicht dargestellte Halte- und Antriebsmittel mechanisch unter Zwischenlage von ebenfalls nicht dargestellten, zu verschweißenden Bauteilen, insbesondere Metallblechen, zusammenführbar und mit einer bestimmten Anpresskraft beaufschlagbar. In dieser mechanischen Anlagestellung werden zum Verschweißen der Bauteile die Schweißelektroden 2 elektrisch mit einem Schweißstrom beaufschlagt, der dann über die Elektroden 2 durch die Bauteile hindurch fließt und durch Widerstandserwärmung ein zonales Aufschmelzen der Bauteile zwecks stoffschlüssiger Verschweißung bewirkt.

Die Figuren 1 und 5 zeigen jeweils als Blockschaltbild eine elektrische Stromquelle 4 zur Erzeugung des Schweißstromes. Die Stromquelle 4 weist einen Kondensatorspeicher 6 und eine Entladesteuerung 8 derart auf, dass der Schweißstrom als Stromimpuls durch eine Kondensatorentladung erzeugbar ist. Zur Ladung des Kondensatorspeichers 6 aus dem elektrischen Versorgungsnetz, d. h. aus einer insbesondere dreiphasigen Netzwechselspannung U_{N} ist zudem eine Ladebeschaltung 10 mit Potenzialtrennung vorgesehen.

Erfindungsgemäß ist die Entladesteuerung 8 von einer direkt ohne Transformator, zwischen den Kondensatorspeicher 6 und die Schweißelektroden 2 geschalteten Leistungselektronik 12 gebildet, die über eine elektronische Steuereinheit 14 zur Spannungsreduzierung und Stromerhöhung ansteuerbar ist. Hierbei ist die Leistungselektronik 12 als Drossel-Abwärtswandler - häufig auch Tiefsetzsteller, Abwärtsregler oder englisch Step-Down-Converter genannt - mit einer in Reihe zu den Elektroden 2 liegenden Induktivität 16 (Drossel) und einem vorgeschalteten Transistor 18 sowie einem zu den Elektroden 2 parallelen Freilaufzweig 20 ausgebildet, wobei der Transistor 18 von der Steuereinheit 14 pulsweitenmoduliert mit einer Frequenz von 15 kHz bis 250 kHz getaktet mit einem variierbaren Taktverhältnis, auch Aussteuergrad genannt, ansteuerbar ist.

Der Kondensatorspeicher 6 besteht in bevorzugter Ausgestaltung aus einer Speicherkaskade 22 mit mehreren, in Reihen- und/oder Parallelschaltung zusammengeschalteten Superkondensatoren 24. Wie oben bereits erläutert ist, kann es sich um elektrostatische Doppelschichtkondensatoren, elektrochemische Pseudokondensatoren oder daraus resultierende Hybridkondensatoren handeln. Vorzugsweise ist parallel zu der Speicherkaskade 22 noch ein Zwischenkreis-Kondensator 26 geschaltet, der z. B. von einem üblichen Schichtkondensator gebildet ist und damit als schnell aufladbarer und schnell entladbarer Impulskondensator fungiert. Zudem bildet der Zwischenkreis-Kondensator 26 gemäß Fig. 2 bis 4 zusammen mit den weiteren Komponenten 16, 18 und 20 den Abwärtswandler der Leistungselektronik 12.

In den Ausführungen gemäß Fig. 1 bis 3 ist die Leistungselektronik 12 als Einfach-Abwärtswandler ausgebildet, wobei der Freilaufzweig 20 im einfachsten Fall gemäß

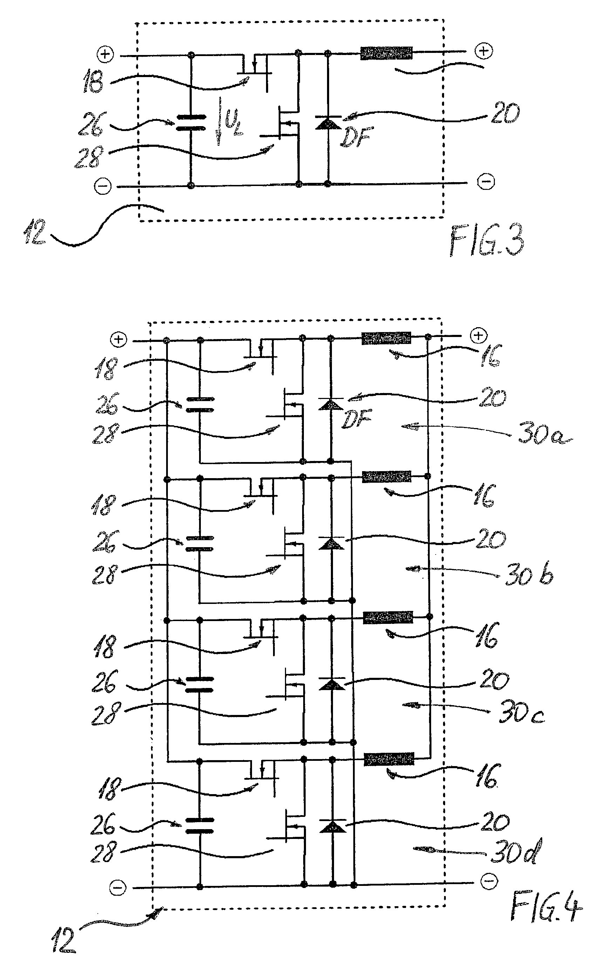

Fig. 1 und 2 von einer üblichen Freilaufdiode DF gebildet sein kann. Gemäß Fig. 3 kann im Freilaufzweig 20 auch ein zusätzlicher Transistor 28 - gegebenenfalls parallel mit der Freilaufdiode DF - vorgesehen sein, der nach Art eines so genannten Synchronwandlers ebenfalls von der Steuereinheit 14 gesteuert wird.

Wie in Fig. 4 und 5 dargestellt ist, kann die Leistungselektronik 12 mit Vorteil auch als Mehrphasen-Abwärtswandler ausgebildet sein, wobei mehrere, wie dargestellt beispielsweise vier parallel geschaltete Wandlerstufen 30a bis 30d zeitversetzt synchronisiert angesteuert werden. Hierbei ist dann jeder Stufe 30a bis 30d ein eigener Zwischenkreis-Kondensator 26 zugeordnet, wobei alle Zwischenkreis-Kondensatoren 26 parallel zueinander und zu der Speicherkaskade 22 geschaltet sind.

Zum Aufladen des Kondensatorspeichers 6 ist die Ladebeschaltung 10 mit Vorteil von einem regelbaren Lade-Netzteil 32 gebildet, bei dem es sich bevorzugt um ein Schaltnetzteil mit Übertrager zur Potenzialtrennung handelt, welches ebenfalls von der Steuereinheit 14 individuell gesteuert oder geregelt wird.

Erfindungsgemäß wird die Stromquelle 4 so ausgelegt und/oder gesteuert, dass die Ladespannung des Kondensatorspeichers 6, gemäß der Erfindung, maximal 120 V beträgt. Der Kondensatorspeicher 6, und zwar in der Hauptsache die Speicherkaskade 22, weist eine hohe Kapazität, gemäß der Erfindung, im Bereich von 1 Farad bis 1.000 Farad auf.

Die Leistungselektronik 12 ist über die Steuereinheit 14 derart steuerbar oder regelbar, dass der erzeugte Stromimpuls mit einer Stromstärke im Bereich von 1 kA bis 50 kA bei einer Spannung im Bereich von 1 V bis 5 V erzeugbar ist, wobei die Impulsdauer in einem Bereich von 10 ms bis 1.500 ms einstellbar ist.

Die vorliegende Erfindung führt erstmals zu der vorteilhaften Möglichkeit, bei einem KES-Schweißverfahren den durch Kondensatorentladung erzeugten Schweißstromimpuls hinsichtlich seiner relevanten Parameter in weiten Bereichen variieren, einstellen und auch regeln zu können. Dabei werden die grundsätzlichen Vorteile des KES-Schweißens beibehalten. Folglich werden im Grunde alle Vorteile der bekannten, eingangs erläuterten Haupt-Schweißverfahren kombiniert, deren Nachteile aber nahezu vollständig beseitigt.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Verfahren zum elektrischen Widerstandsschweißen von metallischen Bauteilen, wobei zwei Schweißelektroden (2) unter Zwischenlage der zu verschweißenden Bauteile zusammengeführt werden und ein elektrischer Schweißstrom über die Elektroden (2) und durch die Bauteile geführt wird, wobei der Schweißstrom aus einem Kondensatorspeicher (6) als Stromimpuls durch Kondensatorentladung erzeugt wird, wobei eine als Abwärtswandler ausgebildete Leistungselektronik (12) zur Steuerung der Kondensatorentladung und des Stromimpulses über eine PWM-Steuerung pulsweitenmoduliert angesteuert wird und der Stromimpuls hinsichtlich seiner Parameter variabel einstellbar ist,
**dadurch** gekennzeichnet, **dass** als Kondensatorspeicher (6) eine Speicherkaskade (22) mit mehreren zusammengeschalteten Superkondensatoren (24) mit einer Gesamt-Kapazität im Bereich von 1 bis 1.000 Farad verwendet wird, wobei der Kondensatorspeicher (6) aus einer Netzwechselspannung (U_{N}) über ein regelbares Netzteil (32) mit einer Ladespannung (U_{L}) von maximal 120 Volt geladen wird, wobei Energie aus dem Kondensatorspeicher (6) über die zur Spannungsreduzierung und Stromerhöhung angesteuerte Leistungselektronik (12) direkt ohne einen Schweißtransformator, den Schweißelektroden (2) zugeführt wird.

2. Verfahren nach Anspruch 1,
**dadurch gekennzeichnet, dass** die Leistungselektronik (12) über die PWM-Steuerung mit einer Frequenz im Bereich von 15 kHz bis 250 kHz getaktet mit einem variierbaren Taktverhältnis angesteuert wird.

3. Verfahren nach Anspruch 1 oder 2,
**dadurch gekennzeichnet, dass** mindestens ein der Speicherkaskade (22) parallel geschalteter Zwischenkreis-Kondensator (26) verwendet wird.

4. Verfahren nach einem der Ansprüche 1 bis 3,
**dadurch gekennzeichnet, dass** der Kondensatorspeicher (6) aus einer dreiphasigen Netzwechselspannung (U_{N}) geladen wird.

5. Verfahren nach einem der Ansprüche 1 bis 4,
**dadurch gekennzeichnet, dass** der Stromimpuls über die Leistungselektronik (12) bei einer Spannung im Bereich von 1 bis 5 Volt auf eine Stromstärke im Bereich von 1 kA bis 50 kA und eine Impulsdauer im Bereich von 10 ms bis 1.500 ms eingestellt wird.

6. Verfahren nach einem der Ansprüche 1 bis 5,
**dadurch** gekennzeichnet, **dass** die als Mehrphasen-Abwärtswandler ausgebildete Leistungselektronik (12) durch zeitversetzte Ansteuerung von mehreren parallelen Wandlerstufen (30a bis 30d) angesteuert wird.

7. Schweißvorrichtung zum elektrischen Widerstandsschweißen von metallischen Bauteilen, mit zwei unter Zwischenlage der zu verschweißenden Bauteile zusammenführbaren und mit einem Schweißstrom beaufschlagbaren Schweißelektroden (2) und mit einer Stromquelle (4) für den Schweißstrom, wobei die Stromquelle (4) einen Kondensatorspeicher (6) und eine Entladesteuerung (8) mit einer Leistungselektronik (12) derart aufweist, dass der Schweißstrom als Stromimpuls durch eine Kondensatorentladung erzeugt wird, wobei die Leistungselektronik (12) als Abwärtswandler mit einer Induktivität (16) und einem vorgeschalteten Transistor (18) sowie einem Freilaufzweig (20) ausgebildet ist, wobei der Transistor (18) von einer Steuereinheit (14) pulsweitenmoduliert getaktet mit einem variierbaren Taktverhältnis angesteuert wird,
**dadurch gekennzeichnet, dass** der Kondensatorspeicher (6) aus einer Speicherkaskade (22) mit mehreren zusammengeschalteten Superkondensatoren (24) mit einer Gesamt-Kapazität im Bereich von 1 bis 1.000 Farad besteht, wobei der Kondensatorspeicher (6) eine Ladespannung (U_{L}) von maximal 120 Volt aufweist, und wobei die Entladesteuerung (8) von einer direkt ohne einen Schweißtransformator, zwischen den Kondensatorspeicher (6) und die Schweißelektroden (2) geschalteten Leistungselektronik (12) gebildet ist, die über die Steuereinheit (14) zur Spannungsreduzierung und Stromerhöhung ansteuerbar ist.

8. Schweißvorrichtung nach Anspruch 7,
**dadurch** gekennzeichnet, **dass** die Leistungselektronik (12) als mehrphasiger Abwärtswandler mit mehreren parallelen Wandlerstufen (30a bis 30d) ausgebildet ist, wobei jede der parallelen Wandlerstufen (30a bis 30d) eine Induktivität (16) und einen vorgeschalteten Transistor (18) sowie einen Freilaufzweig (20) aufweist, und wobei die Transistoren (18) der einzelnen Wandlerstufen (30a bis 30d) zeitversetzt synchronisiert von der Steuereinheit (14) jeweils pulsweitenmoduliert getaktet mit einem variierbaren Taktverhältnis angesteuert werden.

9. Schweißvorrichtung nach Anspruch 8,
**dadurch** gekennzeichet, **dass** der/jeder Freilaufzweig (20) des Abwärtswandlers bzw. jeder Wandlerstufe (30a bis 30d) von einer Freilaufdiode (DF) und/oder einem zusätzlichen Transistor (28) gebildet ist.

10. Schweißvorrichtung nach einem der Ansprüche 7 bis 9,
**dadurch gekennzeichnet, dass** der Speicherkaskade (22) mindestens ein Zwischenkreis-Kondensator (26) parallel geschaltet ist.

11. Schweißvorrichtung nach einem der Ansprüche 7 bis 10,
**dadurch** gekennzeichnet, **dass** dem Kondensatorspeicher (6) ein regelbares Lade-Netzteil (32) vorgeschaltet ist.

## Claims

1. Method for the electrical resistance welding of metallic components, wherein two welding electrodes (2) are brought together, with the components to be welded lying in between, and an electrical welding current is passed by way of the electrodes (2) and through the components, wherein the welding current from a capacitor store (6) is generated as a current pulse by a capacitor discharge, wherein a power electronics unit (12), which is designed as a down converter and is intended for controlling the capacitor discharge and the current pulse, is activated in a pulse-width-modulated manner by way of a PWM control and the current pulse can be set variably with regard to its parameters,
**characterized in that** a storage cascade (22) with multiple interconnected supercapacitors (24) having a total capacitance in the range from 1 to 1000 farads is used as the capacitor store (6), the capacitor store (6) being charged with a charging voltage (U_{L}) of at most 120 V from an AC supply voltage (U_{N}) by way of a controllable power supply unit (32), energy from the capacitor store (6) being fed to the welding electrodes (2) directly, without a welding transformer, by way of the power electronics unit (12) activated for reducing the voltage and increasing the current.

2. Method according to Claim 1,
**characterized in that** the power electronics unit (12) is activated by way of the PWM control with a frequency in the range from 15 kHz to 250 kHz in a clocked manner with a variable clock ratio.

3. Method according to Claim 1 or 2,
**characterized in that** at least one DC-link capacitor (26) connected in parallel with the storage cascade (22) is used.

4. Method according to one of Claims 1 to 3,
**characterized in that** the capacitor store (6) is charged from a three-phase AC supply voltage (U_{N}).

5. Method according to one of Claims 1 to 4,
**characterized in that** the current pulse is set to a current intensity in the range from 1 kA to 50 kA and to a pulse duration in the range from 10 ms to 1500 ms by way of the power electronics unit (12) at a voltage in the range from 1 to 5 V.

6. Method according to one of Claims 1 to 5,
**characterized in that** the power electronics unit (12), designed as a multiphase down converter, is activated by the time-delayed activation of multiple parallel converter stages (30a to 30d).

7. Welding device for the electrical resistance welding of metallic components, comprising two welding electrodes (2), which can be brought together, with the components to be welded in between, and to which a welding current can be applied, and comprising a current source (4) for the welding current, wherein the current source (4) has a capacitor store (6) and a discharge control (8) with a power electronics unit (12) in such a way that the welding current is generated as a current pulse by a capacitor discharge, wherein the power electronics unit (12) is designed as a down converter with an inductance (16) and an upstream transistor (18) and also a freewheeling arm (20), wherein the transistor (18) is activated by a control unit (14) in a pulse-width-modulated clocked manner with a variable clock ratio,
**characterized in that** the capacitor store (6) consists of a storage cascade (22) with multiple interconnected supercapacitors (24) having a total capacitance in the range from 1 to 1000 farads, the capacitor store (6) having a charging voltage (U_{L}) of at most 120 V, and the discharge control (8) being formed by a power electronics unit (12), which is connected between the capacitor store (6) and the welding electrodes (2) directly, without a welding transformer, and which can be activated by way of the control unit (14) for reducing the voltage and increasing the current.

8. Welding device according to Claim 7,
**characterized in that** the power electronics unit (12) is formed as a multiphase down converter with multiple parallel converter stages (30a to 30d), each of the parallel converter stages (30a to 30d) having an inductance (16) and an upstream transistor (18) and also a freewheeling arm (20), and the transistors (18) of the individual converter stages (30a to 30d) being activated in a time-delayed synchronized manner by the control unit (14) in each case in a pulse-width-modulated clocked manner with a variable clock ratio.

9. Welding device according to Claim 8,
**characterized in that** the/each freewheeling arm (20) of the down converter or each converter stage (30a to 30d) is formed by a freewheeling diode (DF) and/or an additional transistor (28).

10. Welding device according to one of Claims 7 to 9,
**characterized in that** at least one DC-link capacitor (26) is connected in parallel with the storage cascade (22).

11. Welding device according to one of Claims 7 to 10,
**characterized in that** a controllable charging power supply unit (32) is connected upstream of the capacitor store (6).

## Revendications

1. Procédé pour le soudage par résistance électrique de pièces métalliques, dans lequel deux électrodes de soudage (2) sont rapprochées l'une de l'autre en interposant les pièces à souder et un courant de soudage électrique est conduit via les électrodes (2) et à travers les pièces, dans lequel le courant de soudage est généré à partir d'un accumulateur à condensateurs (6) en tant qu'impulsion de courant par décharge de condensateur, dans lequel une électronique de puissance (12) réalisée en tant que convertisseur abaisseur pour la commande de la décharge de condensateur et de l'impulsion de courant est déclenchée avec modulation des impulsions en largeur grâce à une commande MIL et l'impulsion de courant est réglable de manière variable concernant ses paramètres,
**caractérisé en ce que** l'on utilise, en guise d'accumulateur à condensateurs (6), une cascade d'accumulateurs (22) avec plusieurs supercondensateurs (24) interconnectés avec une capacité globale dans la plage de 1 à 1000 farads, dans lequel l'accumulateur à condensateurs (6) est chargé à partir d'une tension alternative de réseau (U_{N}) via un élément de réseau réglable (32) avec une tension de charge (U_{L}) d'un maximum de 120 volts, dans lequel de l'énergie provenant de l'accumulateur à condensateurs (6) est amenée directement, via l'électronique de puissance (12) déclenchée pour la réduction de tension et l'augmentation de courant, sans transformateur de soudage, aux électrodes de soudage (2).

2. Procédé selon la revendication 1,
**caractérisé en ce que** l'électronique de puissance (12) est déclenchée via la commande MIL avec une fréquence dans la plage de 15 kHz à 250 kHz de manière cyclique avec un rapport cyclique variable.

3. Procédé selon la revendication 1 ou 2,
**caractérisé en ce qu'**au moins un condensateur de circuit intermédiaire (26) couplé parallèlement à la cascade d'accumulateurs (22) est utilisé.

4. Procédé selon l'une des revendications 1 à 3,
**caractérisé en ce que** l'accumulateur à condensateurs (6) est chargé à partir d'une tension alternative de réseau triphasée (UN).

5. Procédé selon l'une des revendications 1 à 4,
**caractérisé en ce que** l'impulsion de courant est réglée, via l'électronique de puissance (12), en cas d'une tension dans la plage de 1 à 5 volts, à une intensité de courant dans la plage de 1 kA à 50 kA et une durée d'impulsion est réglée dans la plage de 10 ms à 1500 ms.

6. Procédé selon l'une des revendications 1 à 5,
**caractérisé en ce que** l'électronique de puissance (12) réalisée en tant que convertisseur abaisseur polyphasé est déclenchée par déclenchement décalé dans le temps de plusieurs étages de conversion (30a à 30d) parallèles.

7. Dispositif de soudage pour le soudage par résistance électrique de pièces métalliques, avec deux électrodes de soudage (2) pouvant être rapprochées l'une de l'autre en interposant les pièces à souder et pouvant être alimentées par un courant de soudage, et avec une source de courant (4) pour le courant de soudage, dans lequel la source de courant (4) présente un accumulateur à condensateurs (6) et une commande de décharge (8) avec une électronique de puissance (12) de manière à ce que le courant de soudage soit généré en tant qu'impulsion de courant par une décharge de condensateur, dans lequel l'électronique de puissance (12) est réalisée en tant que convertisseur abaisseur avec une inductance (16) et un transistor (18) couplé en amont ainsi qu'un circuit de marche à vide (20), dans lequel le transistor (18) est déclenché par une unité de commande (14) de manière cyclique avec modulation des impulsions en largeur avec un rapport cyclique variable,
**caractérisé en ce que** l'accumulateur à condensateurs (6) se compose d'une cascade d'accumulateurs (22) avec plusieurs supercondensateurs (24) interconnectés avec une capacité globale dans la plage de 1 à 1000 farads, dans lequel l'accumulateur à condensateurs (6) présente une tension de charge (U_{L}) d'un maximum de 120 volts, et dans lequel la commande de décharge (8) est formée par une électronique de puissance (12) couplée directement sans transformateur de soudage entre l'accumulateur à condensateurs (6) et les électrodes de soudage (2), laquelle peut être déclenchée via l'unité de commande (14) pour une réduction de tension et une augmentation de courant.

8. Dispositif de soudage selon la revendication 7,
**caractérisé en ce que** l'électronique de puissance (12) est réalisée en tant que convertisseur abaisseur polyphasé avec plusieurs étages de conversion (30a à 30d) parallèles, dans lequel chacun des étages de conversion (30a à 30d) parallèles présente une inductance (16) et un transistor (18) couplé en amont ainsi qu'un circuit de marche à vide (20), et dans lequel les transistors (18) des étages de conversion (30a à 30d) individuels sont déclenchés de manière synchronisée avec un décalage dans le temps par l'unité de commande (14) respectivement de manière cyclique avec modulation des impulsions en largeur avec un rapport cyclique variable.

9. Dispositif de soudage selon la revendication 8,
**caractérisé en ce que** le/chaque circuit de marche à vide (20) du convertisseur abaisseur ou de chaque étage de conversion (30a à 30d) est formé par une diode de marche à vide (DF) et/ou un transistor (28) supplémentaire.

10. Dispositif de soudage selon l'une des revendications 7 à 9,
**caractérisé en ce qu'**au moins un condensateur de circuit intermédiaire (26) est couplé en parallèle à la cascade d'accumulateurs (22).

11. Dispositif de soudage selon l'une des revendications 7 à 10,
**caractérisé en ce qu'**un élément de charge de réseau (32) réglable est couplé en amont de l'accumulateur à condensateurs (6).
